# FASCICULE DE BREVET EUROPEEN

(11) **EP 2 480 160 B1**
(45) Date de publication et mention de la délivrance du brevet: **04.04.2018**
(21) Numéro de dépôt: 10757208.3
(22) Date de dépôt: 24.09.2010
(51) Int. Cl.: A61C 7/12, A61C 7/28, A61C 7/20

(54) **ARC DE TRAVAIL ORTHODONTIQUE ET SYSTÈME DE TRAITEMENT ORTHODONTIQUE COMPRENANT CET ARC**
KIEFERORTHOPÄDISCHER BOGENDRAHT UND KIEFERORTHOPÄDISCHES BEHANDLUNGSSYTEM MIT DIESEM BOGENDRAHT
ORTHODONTIC WORKING ARCH WIRE, AND ORTHODONTIC TREATMENT SYSTEM INCLUDING SAID ARCH WIRE

(30) Priorité: 25.09.2009 FR 0956657
(43) Date de publication de la demande: 01.08.2012
(73) Titulaire: Meley, Antoine, 28230 Epernon (FR)
(72) Inventeur: Meley, Antoine, 28230 Epernon (FR)
(74) Mandataire: Regimbeau
(86) Numéro de dépôt international: PCT/EP2010/064141
(87) Numéro de publication internationale: WO 2011/036249

(56) Documents cités:
- EP-A1- 0 551 800
- DE-A1-102005 024 587
- JP-A- 2005 110 830
- US-A- 3 052 028
- US-A- 5 823 771
- US-A1- 2007 184 398

## Description

L'invention concerne un arc de travail destiné à la correction orthodontique et réalisé anatomiquement sur mesure. L'invention concerne également un système de traitement orthodontique comprenant une série de ces arcs de travail orthodontiques.

Les systèmes de traitement orthodontique permettent la correction de la position d'un certain nombre de dents situées sur les arcs dentaires du maxillaire et/ou de la mandibule d'un patient. Pour cela, les systèmes de traitement orthodontique comportent des arcs métalliques démontables, générateurs d'efforts, fixés sur des attaches elles-mêmes fixées sur les dents à déplacer ou à utiliser comme point d'appui. Ces efforts appliqués sont des efforts de traction/compression et/ou de torsion. Les arcs métalliques sont placés sur les arcs dentaires soit de manière vestibulaire, soit de manière linguale. Les efforts sont transmis aux dents à déplacer par le biais des attaches collées sur celles-ci. Dans les dispositifs actuels, les arcs métalliques qui s'appuient sur d'autres dents, concernées ou non par le traitement, génèrent sur ces dernières, par voie de conséquence, des efforts parasites en réaction aux efforts ainsi générés. Une des difficultés de la pratique orthodontique est de contrôler au mieux, durant le traitement du patient, ces efforts parasites de réaction qui réduisent l'efficacité du traitement afin d'obtenir un traitement optimal.

Par exemple, le document US 2004/0048223 décrit un système de traitement orthodontique consistant à transmettre les efforts sur les dents à traiter par des gouttières maxillaires et / ou mandibulaires en matière semi-rigide, recouvrant les faces occlusales de toutes les dents de l'arc dentaire. Les efforts exercés sur les dents à traiter sont obtenus par un décalage entre la forme des gouttières et des butées fixées sur les dents à traiter. Toutefois, dans ce système les efforts ne sont pas parfaitement individualisés et des efforts parasites de réaction viennent s'exercer sur les dents adjacentes à la dent à traiter.

Dans le document US 2006/0099544, le système de traitement orthodontique décrit comporte un arc élastomérique présentant des logements pour recevoir des crochets ou des équerres spécifiques collés aux dents. Toutefois, dans ce deuxième système, la résilience de cet arc, bien que permettant le déplacement des dents à traiter, ne permet pas de découpler des mouvements et, de ce fait, d'individualiser les efforts aux seules dents à traiter. De nouveau, des efforts parasites de réaction viennent s'exercer sur les dents adjacentes à la dent à traiter.

Aussi, ces deux procédés altèrent les relations interdentaires par la mise en place de contacts occlusaux non-conformes, nocifs et inconfortables. Le document US 5 823 771 A divulgue des éléments de liaison élastiques et amovibles entre l'arc de travail orthodontique et les bases de liaison destinées à être fixées sur les dents du patient. Dans le document EP0551800, un dispositif conforme au préambule de la revendication 1 est décrit.

Un but de l'invention est de fournir un système de traitement orthodontique comportant des arcs de travail orthodontique qui minimisent les efforts parasites de réaction dus aux efforts nécessaires pour traiter une dent à déplacer.

A cet effet, il est prévu, selon l'invention, un dispositif tel que défini à la revendication 1.

Ainsi, l'utilisation d'un élément de liaison mobile par rapport à l'arc de travail permet d'individualiser de manière optimale les efforts destinés à déplacer entre deux configurations spatiales la dent à traiter, les efforts parasites de réaction étant absorbés par l'arc de travail orthodontique rigide en étant répartis sur la totalité de cet arc de travail.

Avantageusement, mais facultativement, le dispositif représente au moins l'une des caractéristiques additionnelles suivantes :
- le logement présente une complémentarité de forme avec une forme de l'attache ;
- l'attache présente une forme générale pyramidale tronquée, notamment individualisée dans sa forme et ses dimensions ;
- l'attache comporte, en ceinture, une rainure en creux ou un cordon en relief ;
- l'attache comporte trois parties agencées de sorte à former un rupteur de force de type silentbloc ;
- l'arc de travail orthodontique comporte en outre une alvéole destinée à recevoir tout ou partie de l'élément de liaison ;
- les moyens de liaison déformables élastiquement sont venus de matière avec l'arc de travail orthodontique et une partie de l'élément de liaison, de sorte qu'il n'y ait pas de discontinuité de matière entre l'arc de travail orthodontique et la partie de l'élément de liaison ;
- les moyens de liaison comportent au moins une languette et/ou une structure alvéolaire et/ou une liaison pontique ;
- l'arc de travail orthodontique comporte une âme métallique destinée à générer un effort tendant à ouvrir et/ou fermer l'arc de travail orthodontique par un effet ressort ;
- l'arc de travail orthodontique comporte un canal destiné à recevoir une âme métallique ;
- l'arc de travail comporte une ou plusieurs extensions couvrant la gencive permettant un ancrage déporté, notamment par clipsage, sur une vis vissée dans l'os;
- l'arc de travail est agencée de sorte à ne pas perturber les rapports interarcades en ne recouvrant pas les surfaces occlusales des dents ; et
- l'arc de travail orthodontique est réalisé en matière plastique, tel que du polyamide PA12 ou PA6-6.

Il est aussi prévu selon l'invention un système de traitement orthodontique, destiné à effectuer un déplacement d'au moins une dent à traiter d'un arc dentaire d'un patient depuis une configuration spatiale initiale vers une configuration spatiale finale désirée, comportant une série de dispositif présentant au moins l'une des caractéristiques précédentes, de sorte à effectuer le déplacement par étapes successives, chaque arc de travail orthodontique de la série effectuant une étape.

D'autres avantages et caractéristiques de l'invention apparaitront lors de la description ci-après d'un mode préféré de réalisation de l'invention. Aux dessins annexés :
- la figure 1 est une vue de la face occlusale d'un arc dentaire équipé en lingual d'un arc de travail orthodontique selon l'invention ;
- la figure 2 est une vue partielle cavalière en trois dimensions de la figure 1 ;
- la figure 3 est une vue en coupe selon III-III de l'arc de travail orthodontique de la figure 1 monté sur une dent ;
- la figure 4 est une demi-vue de face aux faces occlusales d'un arc dentaire illustrant différentes formes d'attaches d'un arc de travail orthodontique selon l'invention ;

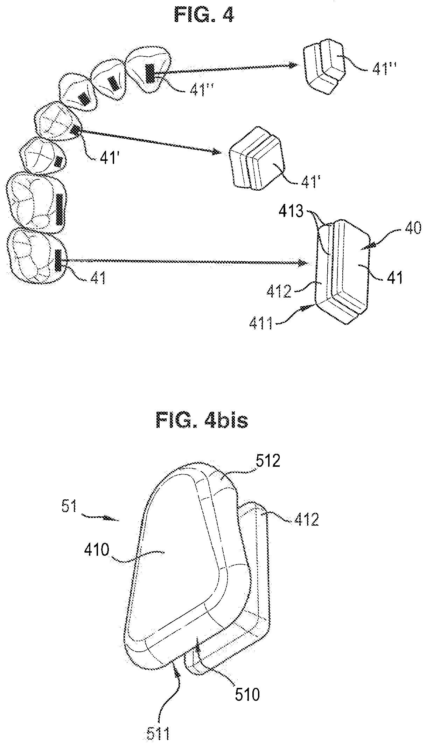

- la figure 4bis est une vue tridimensionnelle d'une variante de réalisation d'une attache d'un arc de travail orthodontique selon l'invention ;

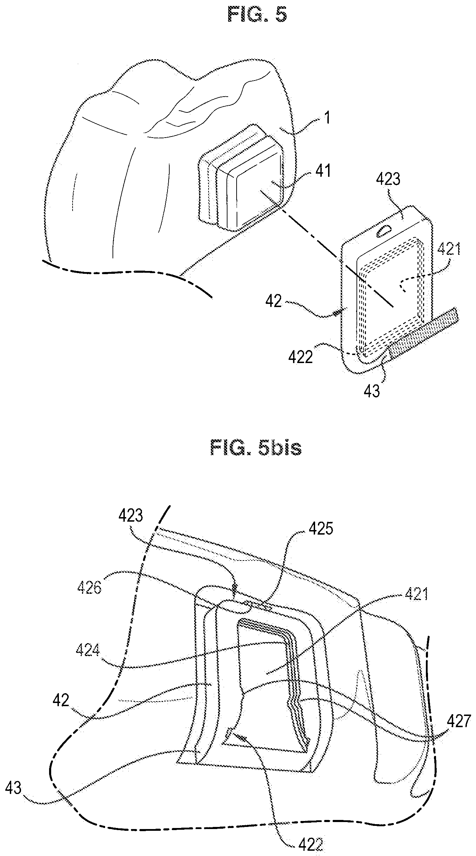

- les figures 5 et 5 bis sont des vues partielles éclatées recto et verso d'une base de liaison d'un arc de travail orthodontique selon l'invention ;

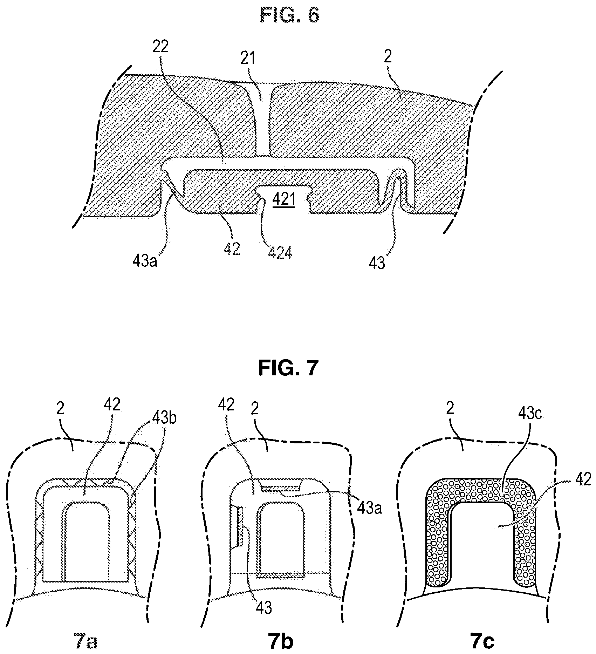

- la figure 6 est une vue partielle en coupe illustrant l'agencement entre l'arc de travail orthodontique selon l'invention et une base de liaison ; et,
- les figures 7a à 7c illustrent différentes liaisons entre l'arc de travail orthodontique selon l'invention et la base de liaison.

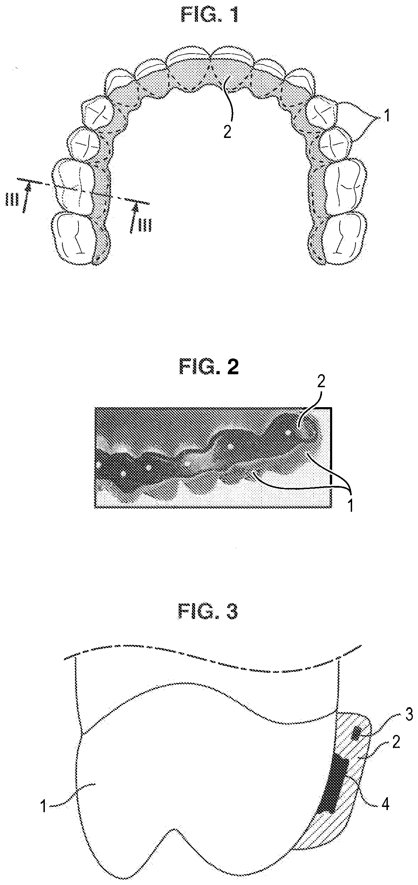

En référence aux figures 1 et 2, un arc de travail orthodontique 2 selon l'invention est réalisé sur mesure et de manière anatomique pour être positionné sur les faces linguales ou vestibulaires des dents d'un arc dentaire 1. Ici, sur les figures 1 et 2, l'arc de travail orthodontique 2 est positionné sur les faces linguales des dents de l'arc dentaire 1. Les faces linguales ou vestibulaires des dents 1 sont recouvertes en totalité ou en partie par l'arc de travail orthodontique 2. Cette disposition permet de ne pas recouvrir les faces occlusales triturantes des dents 1 de l'arc dentaire sur lesquelles est placé l'arc de travail orthodontique 2 selon l'invention.

En référence à la figure 3, nous allons décrire de manière générale la fixation sur une dent 1 d'un arc de travail orthodontique 2 selon l'invention. Sur la face, ici linguale, de la dent 1 est collé un élément de liaison 4, ou encore attache, sur lequel est relié l'arc de travail orthodontique 2, par clipsage par exemple. En coupe, l'arc de travail orthodontique 2 selon l'invention présente une forme de section dont un profil suit sensiblement la face de la dent sur laquelle est destiné à être positionné l'arc de travail orthodontique 2 selon l'invention. En variante de réalisation illustrée ici en figure 3, l'arc de travail orthodontique 2 selon l'invention comporte une âme 3 de renfort. Cette âme 3 de renfort permet d'augmenter les actions correctrices de l'arc de travail orthodontique 2 selon l'invention dans le remodelage de la forme globale de l'arc dentaire sur lequel est installé l'arc de travail orthodontique 2 selon l'invention.

De manière générale, l'arc orthodontique 2 est réalisé en matière plastique compatible avec un usage en bouche. Compte tenu des sollicitations demandées pour exercer les efforts de correction, d'une part, sur les dents et, d'autre part, pour réaliser le remodelage de l'arc dentaire sur lequel l'arc de travail orthodontique 2 est installé, la matière doit avoir des caractéristiques précises en résistance à la compression, à la traction et à la flexion. En particulier, la matière utilisée est un polyamide PA12 ou encore un polyamide PA6-6. De son coté, l'âme 3 de renfort est en général un fil métallique permettant, par un effet ressort, d'ouvrir ou de fermer l'arc de travail orthodontique 2 dans lequel il est installé. De manière connue en soi, le fil métallique formant l'âme 3 de renfort est en titane.

Maintenant, en référence à la figure 4, nous allons décrire des attaches 41, 41', 41" permettant de fixer un arc orthodontique de travail 2 selon l'invention. Sur chacune des faces, ici linguales, des dents 1 de l'arc dentaire à corriger, est fixée une attache 41, 41', 41". Ces attaches 41, 41', 41" sont de forme générale pyramidale tronquée, à base sensiblement rectangulaire ou sensiblement triangulaire, ou de forme parallélépipédique conique présentant chacune une base 411 sur laquelle est appliqué un adhésif adapté afin de coller l'attache sur l'une des faces vestibulaire et linguale de la dent 1. Chacune des attaches 41, 41', 41" présente une face supérieure 410 éloignée de manière sensiblement parallèle à la base 411. La base 411 et la face supérieure 410 sont de forme générale rectangulaire, la face supérieure 410 étant plus petite de manière homothétique par rapport à la base 411. Reliant sur chacun des côtés la base 411 à la face supérieure 410, chacune des attaches 41, 41', 41" présente des faces latérales 412 inclinées les unes vers les autres. Les faces 412 présentent une rainure 413 en creux qui forme ici une ceinture continue ou discontinue sur les attaches 41, 41', 41". En variante de réalisation, les faces 412 présentent un cordon en relief en lieu et place de la rainure 413 précédente. Les dimensions de la base 411, et par conséquence de la face supérieure 410, sont adaptées à la face linguale ou vestibulaire de la dent 1 sur laquelle la dite base 411 est destinée à être fixée. Cela permet d'optimiser et d'assurer, d'une part, la tenue de l'attache sur la dent durant tout le traitement du patient et, d'autre part, la transmission les efforts qui sont susceptibles d'être nécessaire à un déplacement souhaité de la dent à traiter.

En référence à la figure 4bis, l'attache 51 comporte une base 412 sur laquelle est appliqué un adhésif adapté afin de coller l'attache sur l'une des faces vestibulaire et linguale de la dent. Cette base est ici de forme sensiblement rectangulaire. Elle est surmontée d'un col rétréci 511 sur lequel est posé une tête 512. La tête 512 comporte une face supérieure 410 et un cordon en relief 510 s'étendant en ceinture sur un pourtour latérale de ladite tête 512. La tête présente une forme sensiblement triangulaire dont les angles sont arrondis. Cette forme arrondie permet de ne pas provoquer de blessures.

En variante de réalisation, des attaches de type silentbloc peuvent être composées de trois parties assemblées de manière irréversible comportant : une base sur laquelle est appliqué un adhésif adapté afin de coller l'attache sur l'une des faces vestibulaire et linguale de la dent 1, cette base étant surélevée d'une structure de transmission des efforts, surmontée d'un polymère élastique de type caoutchouteux ou polyuréthane ou encore silicone, et enfin l'ensemble étant enveloppé d'une carcasse dont le développement d'une face externe est semblable à une face externe des attaches précédemment décrites.

En référence à la figure 5, nous allons décrire en détail un élément de liaison 4 entre la dent 1 et l'arc de travail orthodontique 2 selon l'invention qui permet de redresser ou déplacer de manière singulière ladite dent entre une première configuration spatiale et une seconde configuration spatiale, une fois l'arc de travail orthodontique mis en place dans la bouche du patient. Pour cela, l'élément de liaison 4 comporte, en plus d'une attache 41 fixée sur la face linguale ou vestibulaire de la dent 1 à traiter, une base de liaison 42 reliée à l'arc de travail orthodontique 2 selon l'invention par des moyens de liaison déformables élastiquement 43. La base de liaison 42 est de forme générale parallélépipédique et comporte une cavité 421 s'étendant en creux depuis une face de la base de liaison 42 destinée à être en regard, lors d'un montage de l'arc de travail orthodontique 2 selon l'invention sur la dent 1, de l'attache 41. La forme de la cavité 421 est complémentaire de la forme de l'attache 41 afin que la cavité 421 reçoive, lors de cedit montage, l'attache 41 par encliquetage ou clipsage.

En variante de réalisation illustrée en figure 5bis, un ergot 425 situé sur la face 423 opposé à la base de liaison permet de limiter le mouvement de la languette par coopération avec un réceptacle en creux 426 situé en regard dans l'arc de travail 1.

Lors de l'encliquetage ou le clipsage de l'attache 41 dans la cavité 421, la cavité 421 comporte une protubérance 424 (resp. une dépression) s'étendant en saillie (resp. en creux) depuis au moins une face latérale de la cavité 421 vers l'intérieure de celle-ci et destinée à être reçue dans la rainure 413 (resp. à recevoir le cordon en relief) de l'attache 41. En variante de réalisation la protubérance 424 s'étend en ceinture sur tout ou partie d'une périphérie de la cavité 421.

En une autre variante de réalisation, la base de liaison 42 comporte, depuis une face latérale supérieure 423, une rainure 422 débouchant dans la cavité 421. Une telle rainure 422 verticale permet de monter, lors d'un mouvement vertical vers le haut ou vers le bas selon que l'arc orthodontique de travail 2 est monté sur le maxillaire ou sur la mandibule du patient, par enfourchement la base de liaison 42 sur l'attache 41 fixée sur la dent 1. Un ou deux bossages 427 permettent de maintenir fixement la base de liaison à l'attache 41 en s'opposant aux forces d'arrachement ou de déclipsage, en constituant une contre dépouille dans le sens de la direction de l'enfourchement.

En référence aux figures 6 et figures 7, nous allons décrire plus en détail l'interaction entre la base de liaison 42 et l'arc de travail orthodontique 2 selon l'invention. En regard de la base de travail 42, l'arc de travail orthodontique 2 comporte une alvéole 22 ainsi qu'un orifice 21 traversant une épaisseur de l'arc de travail orthodontique 2 depuis le fond de l'alvéole 22 jusqu'à une face de l'arc de travail orthodontique 2 opposée. Cet orifice 21 a deux intérêts :
- il permet d'appuyer sur la base de liaison à l'aide d'un instrument pouvant passer à travers, afin de clipser correctement l'arc de travail sur les attaches dans les situations difficiles, et
- il permet des mouvements des fluides, entre autres salivaires, vers et en dehors de l'alvéole 22 lors d'un déplacement de la base de liaison 42 au sein de cette alvéole 22 de l'arc de travail orthodontique 2 selon l'invention.

Ici, illustré en figure 6, la base de liaison 42 est reliée à l'arc de travail 2 par des moyens de liaison déformables élastiquement 43, 43a qui se présentent ici sous la forme de languettes. Les formes des languettes formant les moyens de liaison déformables élastiquement 43, 43a sont diverses et variées et surtout adaptées dans leur forme au déplacement spatial de la dent 1 à traiter pour passer d'une première configuration spatiale à une deuxième configuration spatiale par un mouvement de translation et/ou un mouvement de rotation. En plus de leurs formes variées, le nombre de languettes formant les moyens de liaison déformables élastiquement 43, 43a peut varier entre un et quatre (chacune des faces latérales de la base de liaison 42 comporte une ou aucune languette), ce qui permet d'accroître les possibilités de déplacements réalisables sur la dent sur laquelle va être fixée la base de liaison 42. En variante de réalisation, les moyens de liaison déformables élastiquement 43, 43a comportent une liaison pontique fine répartie sur toute ou partie d'un pourtour de la base de liaison 42 comme illustré en figure 7a. Dans une autre variante de réalisation, les moyens de liaison déformables élastiquement comportent une structure alvéolaire de type éponge répartie sur toute ou partie d'un pourtour de la base de liaison 42 comme illustré dans la figure 7c. D'autres structures de moyens de liaison déformables élastiquement 43 sont possibles.

Quel que soit la structure des moyens de liaison déformables élastiquement 43, l'arc orthodontique de travail 2 selon l'invention, les moyens de liaison déformables élastiquement 43 et la base de liaison 42 sont venus de matière l'un avec l'autre. Ceci évite des discontinuités de matière entre l'arc orthodontique et la base de liaison, ce qui fragiliserait et complexifierait l'arc de travail orthodontique 2 selon l'invention.

Un tel montage entre les différentes bases de liaison 42 et l'arc de travail orthodontique 2 selon l'invention permet à chacune des bases de liaison 42 de pouvoir se déplacer dans l'alvéole 22 correspondante de l'arc de travail orthodontique 2. Les moyens de liaison déformables élastiquement 43 reliant la base de liaison 42 à l'arc de travail orthodontique 2 selon l'invention permettent de générer des efforts transmis à la dent à traiter afin de réaliser le déplacement souhaité entre une première configuration spatiale de cette dent une seconde configuration spatiale désirée de cette même dent. En effet, tout déplacement de la base de liaison 42 dans l'alvéole 22 associée de l'arc de travail orthodontique 2 fait naître un effort dû à l'élasticité de la matière constituant les moyens de liaison déformables élastiquement. L'intensité de cet effort transmis par la base de liaison 42 à la dent 1 à traiter dépend donc de l'importance et de la forme de la structure des moyens de liaison déformables élastiquement utilisés sur ladite base de liaison 42 à l'arc de travail orthodontique 2 selon l'invention, structure modulable comme décrit précédemment dans sa réalisation en fonction des efforts à produire permettant de réaliser les objectifs de déplacement tout en respectant la physiologie des tissus vivants. Ceci permet de personnaliser les efforts à produire sur chaque dent à traiter à la fois en direction, en intensité, et en limite de mouvement. De par sa rigidité, l'arc de travail permet de « diluer » l'effort parasite de réaction à l'effort exercé sur la dent à traiter afin de ne pas transmettre cet effort parasite sur les dents adjacentes à la dent à traiter, mais à le répartir sur l'ensemble de l'arc de travail orthodontique, rendant négligeable l'effort parasite résultant de cette répartition et résolvant ainsi l'inconvénient des systèmes conventionnels actuels. Cette rigidité de l'arc de travail orthodontique permet à ce dernier, une fois en place sur l'arc dentaire à traiter, de conserver sa forme en réaction à l'effort exercé sur la dent à traiter. Ainsi en ne se déformant pas lors de cette réaction, l'arc de travail orthodontique selon l'invention permet une répartition de l'effort parasite de réaction sur l'ensemble dudit arc orthodontique de travail.

Toutefois, la conception d'un arc de travail orthodontique 2 selon l'invention ne permet pas de transmettre des efforts sensiblement constants pendant le déplacement dentaire sur des distances supérieures à quelques dixièmes de millimètres. C'est pourquoi les arcs de travail orthodontiques selon l'invention doivent évoluer pendant la progression du traitement qui permet de déplacer la ou les dents à traiter entre une configuration spatiale initiale vers une configuration spatiale finale désirée. Les arcs de travail orthodontiques successifs compris dans un système de traitement orthodontique selon l'invention sont différents les uns des autres et chacun correspond à une étape dans l'évolution de la correction orthodontique souhaitée du patient.

Nous allons maintenant décrire brièvement une méthode de réalisation d'un arc de travail orthodontique selon l'invention. Pour cela, une étape initiale de saisie tridimensionnelle de la configuration des dents ainsi que de leurs racines d'un patient à traiter est réalisée à l'aide d'un scanner à rayons X ou à un scanner tridimensionnel photo (ou tout autre spectre de fréquence utilisable à cette fin). Puis, à partir de cette saisie, une représentation des arcades est intégrée et travaillée afin de permettre un repositionnement des dents en fonction des objectifs de traitement demandés et souhaités par le praticien. Un repositionnement progressif des dents permet de visualiser les arcades corrigées. Ce repositionnement tient compte de la cohérence des rapports occlusaux durant le déroulement du traitement. Une segmentation de ce repositionnement progressif est alors définie, chaque segment représentant une étape à laquelle sera associé un arc de travail orthodontique selon l'invention. De là, les arcs de travail orthodontiques selon l'invention sont définis puis fabriqués sur machine suivant une technique dite de fusion laser ou de stéréo lithographie à partir de données représentant la segmentation du repositionnement progressif précédemment défini. La série d'arcs de travail orthodontique ainsi obtenu est intégré dans un système de traitement orthodontique.

Bien entendu, il est possible d'apporter à l'invention de nombreuses modifications sans sortir du cadre de celle-ci tel que défini par les revendications 1 à 10.

## Revendications

1. Dispositif comprenant :
- un arc de travail orthodontique (2), destiné à déplacer au moins une dent (1) à traiter d'un arc dentaire d'un patient depuis une première configuration spatiale vers une deuxième configuration spatiale,
- un élément de liaison (40, 41, 41', 41", 51, 42) avec la dent à traiter destiné à être fixé sur la dent à traiter,
ledit dispositif étant **caractérisé en ce que** :
- l'arc de travail est rigide, et
- l'élément de liaison est mobile par rapport à l'arc de travail rigide et relié à l'arc de travail rigide par des moyens de liaison (43, 43a, 43b, 43c) déformables élastiquement,
la rigidité de l'arc de travail orthodontique étant adaptée de sorte que, une fois en place sur l'arc dentaire à travailler, l'arc de travail conserve sa forme en réaction aux efforts exercés sur les dents à traiter, tandis que les moyens de liaison déformables élastiquement permettent de générer des efforts transmis à la dent (1) à traiter afin de réaliser le déplacement souhaité entre la première configuration spatiale de cette dent et la seconde configuration spatiale désirée de cette même dent,
dans lequel l'élément de liaison comporte :
- une attache (40, 41, 41', 41", 51) destinée à être fixée sur la dent à traiter,
- une base de liaison (42) reliée à l'arc de travail orthodontique par les moyens de liaisons déformables élastiquement (43a), **caractérisé en ce que** la base de liaison comporte un logement (421) destiné à recevoir l'attache par encliquetage ou par enfourchement vertical,

2. Dispositif selon la revendication 1, **caractérisé en ce que** le logement présente une complémentarité de forme avec une forme de l'attache.

3. Dispositif selon l'une des revendications 1 à 2, **caractérisé en ce que** l'attache présente une forme générale pyramidale tronquée, notamment individualisée dans sa forme et ses dimensions.

4. Dispositif selon l'une des revendications 1 à 3, **caractérisé en ce que** l'attache comporte, en ceinture, une rainure en creux (413) ou un cordon en relief (510).

5. Dispositif selon l'une des revendications 1 à 4, **caractérisé en ce que** l'attache comporte trois parties agencées de sorte à former un rupteur de force.

6. Dispositif selon l'une des revendications 1 à 5, **caractérisé en ce qu'**il comporte en outre une alvéole (22) destinée à recevoir tout ou partie de l'élément de liaison.

7. Dispositif selon l'une des revendications 1 à 6, **caractérisé en ce que** les moyens de liaison déformables élastiquement sont venus de matière avec l'arc de travail orthodontique et une partie de l'élément de liaison, de sorte qu'il n'y ait pas de discontinuité de matière entre l'arc de travail orthodontique et la partie de l'élément de liaison.

8. Dispositif selon la revendication 7, **caractérisé en ce que** les moyens de liaisons comportent au moins une languette (43, 43a) et/ou une structure alvéolaire (43c) et/ou liaison pontique (43b).

9. Dispositif selon l'une des revendications 1 à 8, **caractérisé en ce qu'**il est réalisé en matière plastique, tel que du polyamide PA12 ou PA6-6.

10. Système de traitement orthodontique, destiné à effectuer un déplacement d'au moins une dent à traiter d'un arc dentaire d'un patient depuis une configuration spatiale initiale vers une configuration spatiale finale désirée, **caractérisé en ce qu'**il comporte une série de dispositifs selon l'une des revendications 1 à 9, de sorte à effectuer le déplacement par étapes successives, chaque arc de travail orthodontique de la série effectuant une étape.

## Patentansprüche

1. Vorrichtung, umfassend:
- einen kieferorthopädischen Bogendraht (2), der bestimmt ist, mindestens einen zu behandelnden Zahn (1) eines Zahnbogens eines Patienten aus einer ersten räumlichen Konfiguration in eine zweite räumliche Konfiguration zu verlagern,
- ein Verbindungselement (40, 41, 41', 41", 51, 42) mit dem zu behandelnden Zahn, das bestimmt ist, an dem zu behandelnden Zahn befestigt zu sein,
wobei die Vorrichtung **dadurch gekennzeichnet ist, dass**:
- der Bogendraht fest ist, und
- das Verbindungselement in Bezug zu dem Bogendraht beweglich ist und mit dem Bogendraht anhand von elastisch verformbaren Verbindungsmitteln (43, 43a, 43b, 43c) verbunden ist,
wobei die Festigkeit des kieferorthopädischen Bogendrahts derart ausgebildet ist, dass der Bogendraht, einmal auf dem zu behandelnden Zahnbogen platziert, seine Form in Reaktion auf die auf die zu behandelnden Zähne ausgeübten Kräfte beibehält, wogegen die elastisch verformbaren Verbindungsmittel erlauben, Kräfte zu erzeugen, die an den zu behandelnden Zahn (1) übertragen werden, um die gewünschte Verlagerung zwischen der ersten räumlichen Konfiguration dieses Zahns und der gewünschten zweiten räumlichen Konfiguration dieses selben Zahns durchzuführen,
wobei das Verbindungselement aufweist:
- eine Befestigung (40, 41, 41', 41", 51), die bestimmt ist, auf dem zu behandelnden Zahn befestigt zu sein,
- eine Verbindungsbasis (42), die mit dem kieferorthopädischen Bogendraht anhand der elastisch verformbaren Verbindungsmittel (43a) verbunden ist, **dadurch gekennzeichnet, dass** die Verbindungsbasis eine Aufnahme (421) aufweist, die zum Empfang der Befestigung durch Rasten oder vertikales Aufsetzen bestimmt ist.

2. Vorrichtung nach Anspruch 1, **dadurch gekennzeichnet, dass** die Aufnahme eine Formkomplementarität mit einer Form der Befestigung aufweist.

3. Vorrichtung nach einem der Ansprüche 1 bis 2, **dadurch gekennzeichnet, dass** die Befestigung eine allgemeine abgestumpfte Pyramidenform aufweist, die insbesondere in ihrer Form und in ihren Abmessungen individualisiert ist.

4. Vorrichtung nach einem der Ansprüche 1 bis 3, **dadurch gekennzeichnet, dass** die Befestigung am Gürtel eine hohle Rille (413) oder einen Reliefstrang (510) aufweist.

5. Vorrichtung nach einem der Ansprüche 1 bis 4, **dadurch gekennzeichnet, dass** die Befestigung drei Teile aufweist, die derart ausgebildet sind, dass ein Krafttrenner gebildet ist.

6. Vorrichtung nach einem der Ansprüche 1 bis 5, **dadurch gekennzeichnet, dass** sie ferner eine Wabe (22) aufweist, die zum Empfang des gesamten oder eines Teils des Verbindungselements bestimmt ist.

7. Vorrichtung nach einem der Ansprüche 1 bis 6, **dadurch gekennzeichnet, dass** die elastisch verformbaren Verbindungsmittel mit dem kieferorthopädischen Bogendraht und einem Teil des Verbindungselements materiell zusammenhängend sind, so dass es keine materielle Diskontinuität zwischen dem kieferorthopädischen Bogendraht und dem Teil des Verbindungselements gibt.

8. Vorrichtung nach Anspruch 7, **dadurch gekennzeichnet, dass** die Verbindungsmittel mindestens eine Zunge (43, 43a) und/oder eine Wabenstruktur (43c) und/oder eine Brückenverbindung (43b) aufweisen.

9. Vorrichtung nach einem der Ansprüche 1 bis 8, **dadurch gekennzeichnet, dass** sie aus Kunststoff wie Polyamid PA12 oder PA6-6 hergestellt ist.

10. Kieferorthopädisches Behandlungssystem, das bestimmt ist, eine Verlagerung mindestens eines zu behandelnden Zahns eines Zahnbogens eines Patienten aus einer räumlichen Anfangskonfiguration in eine gewünschte räumliche Endkonfiguration durchzuführen, **dadurch gekennzeichnet, dass** es eine Reihe von Vorrichtungen nach einem der Ansprüche 1 bis 9 umfasst, so dass die Verlagerung in aufeinanderfolgenden Schritten durchgeführt wird, wobei jeder kieferorthopädische Bogendraht der Reihe einen Schritt durchführt.

## Claims

1. A device comprising:
- an orthodontic working wire arch (2), designed to move at least one tooth (1) to be treated in a dental arch of a patient from a first spatial configuration toward a second spatial configuration,
- an element (40, 41, 41', 41", 51, 42) for connecting to the tooth to be treated, designed to be attached onto the tooth to be treated,
said device being **characterized in that**:
- the working wire arch is rigid, and
- the connecting element is movable with respect to the rigid working wire arch and connected to the rigid working wire arch by elastically deformable connecting means (43, 43a, 43b, 43c),
the stiffness of the orthodontic working wire arch being adapted such that, once in place on the dental arch to be treated, the working wire arch retains its shape in reaction to the force exerted on the teeth to be treated, while the elastically deformable connecting means make it possible to generate forces transmitted to the tooth (1) to be treated in order to achieve the desired displacement between the first spatial configuration of this tooth and the second desired spatial configuration of this same tooth,
wherein the connecting element includes:
- a connector (40, 41, 41', 41", 51) designed to be attached onto the tooth to be treated,
- a connecting base (42) connected to the orthodontic working wire arch by the elastically deformable connecting means (43a), **characterized in that** the connecting base includes a recess (421) designed to receive the connector by snap action or by a vertical forked tenon.

2. The device according to claim 1, **characterized in that** the recess has a shape complementary to a shape of the connector.

3. The device according to one of claims 1 to 2, **characterized in that** the connector has a general shape of a truncated pyramid, particularly individualized in its shape and dimensions.

4. The device according to one of claims 1 to 3, **characterized in that** the connector has, ringing it beltwise, a sunken groove (413) or a bead in relief (510) .

5. The device according to one of claims 1 to 4, **characterized in that** the connector has three portions arranged so as to form a stress breaker.

6. The device according to one of claims 1 to 5, **characterized in that** it further includes a cavity (22) designed to receive all or part of the connecting element.

7. The device according to one of claims 1 to 6, **characterized in that** the elastically deformable connecting means are of the same material as the orthodontic working wire arch and part of the connecting element, so that there is no discontinuity of material between the orthodontic working wire arch and the part of the connecting element.

8. The device according to claim 7, **characterized in that** the connecting means include at least one tab (43, 43a) and/or an alveolar structure (43c) and/or a pontic connection (43b).

9. The device according to one of claims 1 to 8, **characterized in that** it is made of plastic, such as PA12 or PA6-6 polyamide.

10. An orthodontic treatment system, designed to carry out a displacement of at least one tooth to be treated in a dental arch of a patient from an initial spatial configuration toward a desired final spatial configuration, **characterized in that** it includes a series of devices according to one of claims 1 to 9, so as to carry out the displacement by successive steps, each orthodontic working wire arch of the series carrying out one step.
